# EUROPÄISCHE PATENTSCHRIFT

(11) **EP 0 469 170 B1**
(45) Veröffentlichungstag und Bekanntmachung des Hinweises auf die Patenterteilung: **09.03.1994**
(21) Anmeldenummer: 90114795.9
(22) Anmeldetag: 01.08.1990
(51) Int. Cl.: F01N 3/22, F01N 3/20, F01N 9/00

(54) **Verfahren zum Aufheizen eines Abgaskatalysators**
Method for heating an exhaust gas catalyst
Procédé de chauffage d'un catalyseur pour gaz d'échappement

(43) Veröffentlichungstag der Anmeldung: 05.02.1992
(73) Patentinhaber: SIEMENS AKTIENGESELLSCHAFT, 80333 München (DE)
(72) Erfinder: Achleitner, Erwin, Dipl.-Ing., D-8400 Regensburg (DE); Kapphan, Friedrich, Dipl.-Ing., D-8400 Regensburg (DE)

(56) Entgegenhaltungen:
- DE-A- 3 436 609
- PATENT ABSTRACTS OF JAPAN vol. 10, no. 222 (M-504)(2278) 02 August 1986, & JP-A-61 58912 (MAZDA) 26. März 1986
- PATENT ABSTRACTS OF JAPAN vol. 11, no. 98 (M-575)(2545) 27 März 1987, & JP-A-61 247810 (MAZDA) 05 November 1986
- PATENT ABSTRACTS OF JAPAN vol. 12, no. 14 (M-659)(2861) 16 Januar 1988, & JP-A-62 174524 (HONDA) 31 Juli 1987
- PATENT ABSTRACTS OF JAPAN vol. 12, no. 222 (M-712)(3069) 24 Juni 1988, & JP-A-63 18122 (MAZDA) 26 Januar 1988
- PATENT ABSTRACTS OF JAPAN vol. 13, no. 340 (M-857)(3688) 31 Juli 1989, & JP-A-1116213 (TOYOTA) 09 Mai 1989
- PATENT ABSTRACTS OF JAPAN vol. 13, no. 552 (M-903)(3900) 08 Dezember 1989, & JP-A-1227815 (MITSUBISHI) 12 September 1989

## Beschreibung

Die Erfindung betrifft ein Verfahren zum Aufheizen eines Abgaskatalysators einer Brennkraftmaschine während des Warmlaufs gemäß Oberbegriff von Anspruch 1.

Bei einer Brennkraftmaschine mit Lambda-Regelung ist die Lambda-Sonde nach dem Start üblicherweise sehr schnell auf ihre Betriebstemperatur aufgeheizt. Die Aufheizzeit des Abgaskatalysators ist dagegen bedingt durch seine größere Masse entsprechend länger. Um während der an die Startphase anschließenden Warmlaufphase den Katalysator möglichst schnell auf seine Betriebstemperatur zu bringen und damit die optimalen Konvertierungsraten zu nutzen, wird der Katalysator durch verschiedene Maßnahmen beheizt.

Eine solche Maßnahme ist die Sekundärlufteinblasung in den Abgastrakt der Brennkraftmaschine. Dabei wird über eine Sekundärluftpumpe während des Warmlaufs Sekundärluft hinter die Auslaßventile geblasen. Durch die Reaktion der eingeblasenen Luft mit den heißen Auspuffgasen und die weitere Oxidation im Katalysator wird dieser dadurch schneller aufgeheizt.

Bei Beendigung der Warmlaufphase und dem Übergang von der lastabhängig gesteuerten Warmlaufanreicherung zur Lambda-Regelung wird die Sekundärlufteinblasung beendet. Ein solches System ist z.B. in der Motortechnischen Zeitschrift 50 (1989) in dem Artikel "Die Abgasreinigung der neuen Mercedes Benz 300 SL - 24 und 500 SL - Aufbau und Wirkungsweise" beschrieben.

Gemäß der DE 23 29 539 wird während des Warmlaufs zum Aufheizen des Katalysators ein angereichertes Gemisch eingeregelt und die Menge der Sekundärluft entsprechend dem Ausgangssignal einer Lambda-Sonde auf einen Gemischwert von 0,985 bis 0,995 geregelt.

Durchgeführte Versuche mit solchen Sekundärlufteinblasungen haben ergeben, daß bei unterschiedlichen Betriebszuständen sich nicht immer gleich gute Ergebnisse bei der Verkürzung der Aufheizzeit des Katalysators ergeben.

Der Erfindung liegt daher die Aufgabe zugrunde, ein solches Verfahren weiter zu verbessern, so daß sich insbesondere unter allen Betriebsbedingungen immer eine möglichst kurze Aufheizzeit des Katalysators ergibt. Außerdem soll eine einfache Diagnose des gesamten Sekundärluftsystems möglich sein.

Die erfindungsgemäße Lösung ist im Anspruch 1 gekennzeichnet. Vorteilhafte Weiterbildungen der Erfindung finden sich in den Unteransprüchen.

Der Erfindung liegt die Einsicht zugrunde, daß je nach Belastungszustand der Brennkraftmaschine während des Warmlaufs ab einer bestimmten Menge von eingeblasener Sekundärluft eine Abkühlung bewirkt wird, die der Aufheizung entgegenwirkt und diese dadurch verzögert.

Der Grund für diese Abkühlung liegt in den besonderen Umständen während des Warmlaufs. Bekanntlich wird dabei die Brennkraftmaschine mit einem angereicherten Gemisch betrieben, wodurch im Abgastrakt gegenüber einem stöchiometrischen Gemisch weniger Luft vorhanden ist. Durch die Sekundärlufteinblasung im Abgastrakt kommt wieder Luft hinzu, die eine bessere Aufheizung bewirkt. Dies allerdings nur solange, bis die Menge der zusätzlichen Sekundärluft zusammen mit der im Abgas enthaltenen Luft einem annähernd stöchiometrischen Verhältnis entspricht. Wird diese Menge an Sekundärluft überschritten, erzeugt die gegenüber Stöchiometrie überschüssige Luftmenge nur noch eine Abkühlung durch die Luftströmung und nimmt nicht mehr an exothermen chemischen Reaktionen teil. Dieser Effekt tritt auch bei einer geregelten Sekundärlufteinblasung auf durch Überschwingen und relativ lange Reaktionszeiten, bedingt durch Gaslaufzeiten und auch die Totzeit der Lambda-Sonde.

Die erfindungsgemäße Lösung sieht daher vor, die Menge der eingeblasenen Sekundärluft je nach Betriebszustand immer schnellstmöglich anzupassen, so daß sich ein stöchiometrisches Verhältnis ergibt.

Gemäß einer Ausführungsform der Erfindung wird die Fördermenge der Sekundärluftpumpe daher gesteuert entsprechend dem Anreicherungsfaktor und der angesaugten Luftmasse. Der Anreicherungsfaktor entspricht einer bestimmten Mehrmenge an Kraftstoff, die einer angesaugten Luftmenge beigegeben wird, als dies für ein stöchiometrisches Gemisch notwendig wäre. Daher wird gemäß dieser Mehrmenge an Kraftstoff durch die Sekundärlufteinblasung auch eine Mehrmenge an Luft zugegeben, so daß dann wieder stöchiometrische Verhältnisse vorliegen.

Gemäß einer anderen Ausführungsform wird die Fördermenge der Sekundärluftpumpe gemäß der Last der Brennkraftmaschine verbunden mit einer Temperaturkorrektur eingestellt.

Dieser Vorsteuerung der Fördermenge der Sekundärluftpumpe ist eine Regelung überlagert. Diese Regelung dient dazu, eine eventuell im Laufe der Zeit fehlangepaßte Vorsteuerung zu korrigieren.

Als Istwertgröße für die Regelung dient das Ausgangssignal der Lambda-Sonde. Da die Lambda-Sonde bereits kurz nach dem Start ihre Betriebstemperatur erreicht, ist diese Lambda-Regelung bereits während des Warmlaufs möglich. Da weiterhin die Sekundärluftmenge vor der Lambda-Sonde eingeblasen wird ist durch die Lambda-Regelung die Steuerung der Fördermenge der Sekundärluftpumpe korrigierbar, so daß sich durch die Sekundärluftmenge stöchiometrische Verhältnisse im Abgas ergeben.

Ein besonderer Vorteil dieser Lambda-Regelung ist die damit verbundene Diagnosemöglichkeit des Sekundärluftsystems. Aus der Regelabweichung kann nämlich sicher darauf geschlossen werden, ob das Sekundärluftsystem funktioniert oder nicht.

Ein weiterer Vorteil der überlagerten Regelung ist die dadurch mögliche Adaption der Vorsteuerung, wobei die Vorsteuerwerte laufend oder von Zeit zu Zeit so geändert werden, daß die Regelung möglichst wenig eingreifen muß. Diese Adaptionswerte können sowohl additiv als auch multiplikativ die Vorsteuerwerte verändern.

Die Erfindung wird anhand der Figuren näher erläutert. Dabei zeigen:
- Figur 1: ein vereinfachtes Blockschaltbild einer Brennkraftmaschine, bei der das erfindungsgemäße Verfahren angewendet wird und
- Figur 2: ein Flußdiagramm für eine Rechenroutine zur Durchführung des Verfahrens.

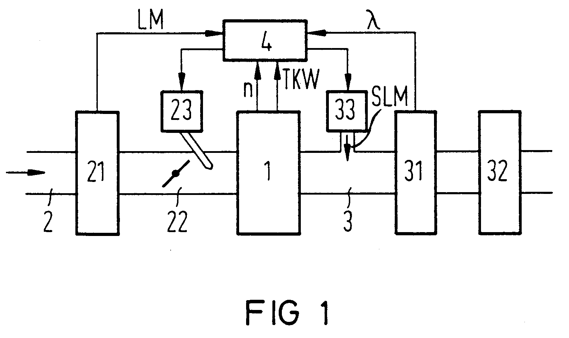

Das Blockschaltbild der Figur 1 zeigt einen Motorblock 1 mit einem daran angeschlossenen Ansaugtrakt 2 und einem Abgastrakt 3.

In dem Ansaugtrakt 2 ist ein Luftmassenmesser 21 angeordnet, der ein Ausgangssignal entsprechend der angesaugten Luftmasse LM abgibt. Eine vom Fahrer betätigte Drosselklappe 22 dient zur Füllungssteuerung. Im Abgastrakt 3 sind eine Lambda-Sonde 31 sowie ein nachgeschalteter Katalysator 32 angeordnet. Die Lamda-Sonde 31 hat eine Zweipunktcharakteristik, d.h. sie kann ein reiches und ein mageres Gemisch detektieren und gibt ein entsprechendes Sondensignal λ ab.

Eine Steuerung 4 erhält als Eingangssignale die Luftmasse LM, das Sondensignal λ sowie über entsprechende Geber die Drehzahl n und die Kühlwassertemperatur TKW der Brennkraftmaschine.

Ausgangsseitig steuert die Steuerung 4 ein Einspritzsystem 23 an, das - wie in der Figur lediglich angedeutet - über Einspritzventile Kraftstoff in den Ansaugtrakt einspritzt. Beim hier betrachteten Fall des Warmlaufs der Brennkraftmaschine bestimmt die Steuerung 4 die Kraftstoffeinspritzmenge aufgrund der angesaugten Luftmasse LM und der Drehzahl n. Sie berücksichtigt zusätzlich eine bestimmte Anreicherung des Gemisches über ein stöchiometrisches Gemischverhältnis hinaus, da im Warmlauf die Brennkraftmaschine ein reiches Gemisch braucht. Aus diesem Grund ist auch die im normalen Fahrbetrieb überlagerte Lambda-Regelung während des Warmlaufs noch ausgeschaltet.

Über einen weiteren Ausgang steuert die Steuerung 4 eine Sekundärluftpumpe 33, die eine Sekundärluftmenge SLM hinter die Auslaßventile und vor der Lambdasonde 31 einbläst. Die Sekundärluftpumpe 33 ist eine Elektropumpe, z.B. eine Flügelzellenpumpe, deren Fördermenge einstellbar ist.

Falls eine Sekundärluftpumpe 33 verwendet wird, die nicht steuerbar ist, also eine feste Fördermenge liefert, muß in diesem Fall zur Einstellung der Fördermenge ein steuerbares Ventil vorgesehen werden. Eine solche Sekundärluftpumpe 33 könnte z.B. über den bereits vorhandenen Anlassermotor oder von der Brennkraftmaschine angetrieben werden.

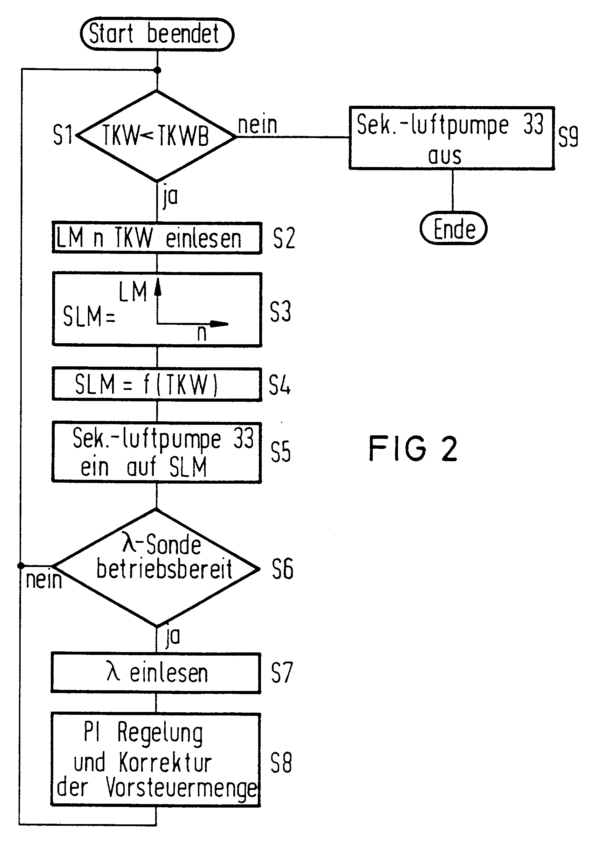

Die Ansteuerung der Sekundärluftpumpe 33 wird anhand des Flußdiagramms der Fig. 2 beschrieben. Nach Beendigung des Starts, also nach Erreichen einer bestimmten Mindestdrehzahl wird beim Schritt S1 geprüft, ob die Kühlwassertemperatur TKW kleiner ist als die Betriebstemperatur TKWB der Brennkraftmaschine.

Ist die Antwort beim Schritt S1 "ja", so befindet sich die Brennkraftmaschine im Warmlaufbetrieb und beim Schritt S2 wird die Luftmasse LM, die Drehzahl n und die Kühlwassertemperatur TKW eingelesen. Beim Schritt S3 wird eine Sekundärluftmenge SLM, also die von der Sekundärluftpumpe 33 zu fördernde Luftmenge, aus einem Kennfeld in Abhängigkeit von der Luftmasse LM und der Drehzahl n ausgelesen. Dieses Kennfeld ist experimentell ermittelt und die Werte sind so gewählt, daß sich für alle Lastzustände ein stöchiometrisches Verhältnis beim Abgas ergibt. Beim Schritt S4 wird dann die im Schritt S3 ermittelte Sekundärluftmenge SLM in Abhängigkeit der Kühlwassertemperatur TKW korrigiert, um verschiedenen Anreicherungsfaktoren der Brennkraftmaschinen bei unterschiedlichen Temperaturen Rechnung zu tragen.

Beim Schritt S5 schaltet dann die Steuerung 4 die Sekundärluftpumpe 33 ein und steuert sie dabei so an, daß sich eine Fördermenge gemäß der ermittelten Sekundärluftmenge SLM ergibt.

Mit den Schritten S6, S7 und S8 wird schließlich ab Betriebsbereitschaft der Lambda-Sonde 31 - Schritt 6 - eine dieser Vorsteuerung überlagerte Lambda-Regelung ausgeführt. Dabei wird beim Schritt S6 das sich ergebende λ von der Lambda-Sonde 31 eingelesen. Beim Schritt S7 folgt schließlich eine PI-Regelfunktion, wobei der λ-Wert als Istgröße, λ = 1 die Sollgröße und die einzustellende Sekundärluftmenge SLM die Stellgröße darstellt. Entsprechend der ermittelten Regelabweichung erfolgt eine Adaption der Kennfeldwerte aus dem Schritt S3.

Die Schritte S1 bis S8 werden solange wiederholt, bis beim Schritt S1 erkannt wird, daß die Betriebstemperatur TKWB erreicht ist und damit die Warmlaufphase beendet ist. In diesem Fall wird auch die Sekundärlufteinblasung beendet und beim Schritt S9 die Sekundärluftpumpe 33 abgeschaltet.

Die Steuerung 4 führt außerdem zyklisch eine Diagnose der Funktion des Sekundärluftsystems 33 durch. Dazu wertet sie eine beim Schritt S8 ermittelte Regelabweichung und die daraufhin durchgeführte Adaption aus. Führt diese Adaption nicht zu einer Verkleinerung der Regelabweichung wird auf einen Fehler im Sekundärsystem geschlossen. Ein solcher erkannter Fehler wird entweder in einem Fehlerspeicher für eine nächste Serviceuntersuchung abgelegt und/oder über eine entsprechende Warneinrichtung im Fahrzeug direkt angezeigt.

Eine weitere Möglichkeit zur Diagnose des Sekundärluftsystems ergibt sich, wenn das Produkt aus angesaugter Luftmasse LM und dem Anreicherungsfaktor kleiner einem Grenzwert ist. Wenn in diesem Zustand die Sekundärluftpumpe 33 im Vollastbetrieb maximale Fördermenge liefert und immer noch eine Regelabweichung vorliegt, die eine größere Fördermenge verlangt, so wird auf einen Fehler im Sekundärluftsystem geschlossen. Der Grenzwert ist dabei so tief gewählt, daß bei intaktem Sekundärluftsystem die Sekundärluftpumpe 33 dabei nur im Teillastbetrieb angesteuert werden müßte.

## Patentansprüche

1. Verfahren zum Aufheizen eines Abgaskatalysators einer Brennkraftmaschine auf Betriebstemperatur während des Warmlaufs
- mit einer Steuerung (4), die abhängig vom Betriebszustand der Brennkraftmaschine ein angereichertes Gemisch einstellt,
- mit einer Lambda-Sonde (31) im Abgastrakt (3), die ein Ausgangssignal entsprechend einem reichen bzw. mageren Gemisch abgibt,
- mit einer Sekundärluftpumpe (33) im Abgastrakt (3), die nach den Auslaßventilen und vor der Lambda-Sonde (31) eine Sekundärluftmenge (SLM) einbläst,
**dadurch gekennzeichnet,**
- daß die Steuerung die Fördermenge der Sekundärluftpumpe (33) abhängig von Betriebsparametern der Brennkraftmaschine auf ein stöchiometrisches Abgasverhältnis vorsteuert und
- ab Betriebsbereitschaft der Lambda-Sonde (31) entsprechend deren Sondensignal (λ) die Vorsteuerung durch eine überlagerte Regelung korrigiert.

2. Verfahren nach Anspruch 1,
**dadurch gekennzeichnet,**
daß die Betriebsparameter der Anreicherungsfaktor des Gemisches und die angesaugte Luftmasse (LM) sind.

3. Verfahren nach Anspruch 1,
**dadurch gekennzeichnet,**
daß die Betriebsparameter die Last (z.B. Luftmasse, Drosselklappenwinkel, Saugrohrdruck), die Drehzahl und die Temperatur der Brennkraftmaschine darstellen.

4. Verfahren nach Anspruch 2 oder 3,
**dadurch gekennzeichnet,**
daß die Sekundärluftpumpe (33) eine steuerbare Elektropumpe ist.

5. Verfahren nach Anspruch 2 oder 3,
**dadurch gekennzeichnet,**
daß als Sekundärluftpumpe (33) eine Pumpe mit fester Fördermenge und einem steuerbaren Ventil dient.

6. Verfahren nach Anspruch 5,
**dadurch gekennzeichnet,**
daß die Sekundärluftpumpe (33) vom Anlassermotor der Brennkraftmaschine angetrieben wird.

7. Verfahren nach Anspruch 1,
**dadurch gekennzeichnet,**
daß zur Diagnose der Sekundärluftsystems die Regelabweichung herangezogen wird.

8. Verfahren nach Anspruch 7,
**dadurch gekennzeichnet,**
daß ein Fehler des Sekundärluftsystems erkannt wird, wenn sich die Regelabweichung nach einem Regeleingriff nicht verkleinert.

9. Verfahren nach Anspruch 7,
**dadurch gekennzeichnet,**
daß ein Fehler des Sekundärluftsystems erkannt wird, wenn das Produkt aus angesaugter Luftmasse (LM) und dem Anreicherungsfaktor kleiner einem Grenzwert ist, die Sekundärluftpumpe (33) dabei auf volle Leistung eingestellt ist und trotzdem noch eine Regelabweichung besteht, die eine größere Sekundärluftmenge (SLM) verlangt.

## Claims

1. Method for heating an exhaust gas catalyst of an internal combustion engine to the operating temperature during the warm-up phase
- with a control facility (4) which sets an enriched mixture as a function of the operating state of the internal combustion engine,
- with a lambda sensor (31) in the exhaust gas system (3) which outputs an output signal corresponding to a rich or lean mixture,
- with a secondary air pump (33) in the exhaust gas system (3) which blows in a secondary air quantity (SLM) downstream of the outlet valves and upstream of the lambda sensor (31),
characterized in that
- the control facility pilot-controls the feed quantity of the secondary air pump (33) to a stoichiometric exhaust gas ratio, as a function of operating parameters of the internal combustion engine and
- once the lambda sensor (31) is ready for operation, corrects the pilot control by a superimposed closed-loop control in accordance with the sensor signal (λ).

2. Method according to Claim 1, characterized in that the operating parameters are the enrichment factor of the mixture and the aspirated air mass (LM).

3. Method according to Claim 1, characterized in that the operating parameters represent the load (e.g. air mass, throttle valve angle, intake pipe pressure), the rpm and the temperature of the internal combustion engine.

4. Method according to Claim 2 or 3, characterized in that the secondary air pump (33) is a controllable electric pump.

5. Method according to Claim 2 or 3, characterized in that a pump with a fixed feed quantity and a controllable valve is used as the secondary air pump (33).

6. Method according to Claim 5, characterized in that the secondary air pump (33) is driven by the starter motor of the internal combustion engine.

7. Method according to Claim 1, characterized in that the control deviation is used for the diagnosis of the secondary air system.

8. Method according to Claim 7, characterized in that a fault in the secondary air system is recognized if the control deviation does not decrease after a control intervention.

9. Method according to Claim 7, characterized in that a fault in the secondary air system is recognized if the product of the aspirated air mass (LM) and the enrichment factor is smaller than a limiting value, if the secondary air pump (33) has been set to full power and if there is nevertheless a control deviation which requires a larger secondary air quantity (SLM).

## Revendications

1. Procédé pour porter un catalyseur de gaz d'échappement d'un moteur à combustion interne à la température de fonctionnement pendant la mise en température, comprenant
- une commande (4) qui, en fonction de l'état de fonctionnement du moteur à combustion interne, donne un mélange enrichi,
- une sonde lambda (31) dans le conduit (3) des gaz d'échappement, qui donne un signal de sortie en fonction d'un mélange riche ou pauvre,
- une pompe (33) secondaire à air dans le conduit (3) des gaz d'échappement, qui insuffle, en aval des soupapes de sortie et en amont de la sonde lambda (31), une quantité (SLM) d'air secondaire,
caractérisé
- en ce que la commande précommande la quantité d'air véhiculé par la pompe (33) à air secondaire, en fonction de paramètres de fonctionnement du moteur à combustion interne, à un rapport stoechiométrique des gaz d'échappement, et
- à partir de l'instant où la sonde lambda (31) est prête à fonctionner, corrige, en fonction du signal lambda (λ) de la sonde, la précommande par superposition d'une régulation.

2. Procédé suivant la revendication 1,
caractérisé
en ce que les paramètres de fonctionnement sont le facteur d'enrichissement du mélange et la masse d'air (LM) aspirée.

3. Procédé suivant la revendication 1,
caractérisé
en ce que les paramètres de fonctionnement représentent la charge (par exemple masse d'air, angle du papillon des gaz, pression à la tubulure d'aspiration), la vitesse de rotation et la température du moteur à combustion interne.

4. Procédé suivant la revendication 2 ou 3,
caractérisé
en ce que la pompe (33) d'air secondaire est une pompe électrique susceptible d'être commandée.

5. Procédé suivant la revendication 2 ou 3,
caractérisé
en ce qu'on se sert comme pompe (33) d'air secondaire d'une pompe dont la quantité d'air véhiculée est fixe et qui a une soupape susceptible d'être commandée.

6. Procédé suivant la revendication 5,
caractérisé
en ce que la pompe (33) à air secondaire est entraînée par le démarreur du moteur à combustion interne.

7. Procédé suivant la revendication 1,
caractérisé
en ce qu'on tire parti de l'écart de régulation pour effectuer un diagnostic sur le système d'air secondaire.

8. Procédé suivant la revendication 7,
caractérisé
en ce qu'on reconnaît un défaut du système d'air secondaire quand l'écart de régulation ne diminue pas après une opération de réglage.

9. Procédé suivant la revendication 7,
caractérisé
en ce qu'on reconnaît un défaut du système d'air secondaire quand le produit de la masse d'air (LM) aspirée par le facteur d'enrichissement est inférieur à un seuil, la pompe (33) d'air secondaire étant réglée à la pleine puissance, et un écart de régulation qui donne une quantité d'air (SLM) secondaire trop grande étant cependant encore présent.
